# EUROPÄISCHE PATENTSCHRIFT

(11) **EP 2 245 494 B1**
(45) Veröffentlichungstag und Bekanntmachung des Hinweises auf die Patenterteilung: **27.01.2021**
(21) Anmeldenummer: 09709871.9
(22) Anmeldetag: 03.02.2009
(51) Int. Cl.: G02B 21/00, G02B 21/10, G01N 21/64, G02B 27/58, G02B 21/36

(54) **VORRICHTUNG UND VERFAHREN ZUM RÄUMLICHEN HOCHAUFLÖSENDEN ABBILDEN EINER STRUKTUR EINER PROBE**
APPARATUS AND METHOD FOR HIGH SPATIAL RESOLUTION IMAGING OF A STRUCTURE OF A SAMPLE
DISPOSITIF ET PROCÉDÉ DE REPRÉSENTATION TRIDIMENSIONNELLE À HAUTE RÉSOLUTION D'UNE STRUCTURE D'UN ÉCHANTILLON

(30) Priorität: 13.02.2008 DE 102008009216
(43) Veröffentlichungstag der Anmeldung: 03.11.2010
(73) Patentinhaber: Carl Zeiss Microscopy GmbH, 07745 Jena (DE)
(72) Erfinder: WOLLESCHENSKY, Ralf, 07743 Jena (DE); LIPPERT, Helmut, 07745 Jena (DE); POWER, Christopher, Cheadle Hulme Cheshire SK8 6AR (GB); RADT, Benno, 22085 Hamburg (DE)
(74) Vertreter: Loritz, Rainer
(86) Internationale Anmeldenummer: PCT/EP2009/000677
(87) Internationale Veröffentlichungsnummer: WO 2009/100830

(56) Entgegenhaltungen:
- EP-A- 1 617 255
- WO-A-2004/053558
- WO-A-2006/127692
- WO-A1-2009/043473
- DE-A1-102006 017 841
- T. BREUNINGER ET AL: "Lateral modulation boosts image quality in single plane illumination fluorescence microscopy" OPTICS LETTERS, Bd. 32, Nr. 13, 1. Juli 2007 (2007-07-01), Seiten 1938-1940, XP002529108 in der Anmeldung erwähnt
- GREGER K ET AL: "Basic building units and properties of a fluorescence single plane illumination microscope" REVIEW OF SCIENTIFIC INSTRUMENTS, AIP, MELVILLE, NY, US, Bd. 78, Nr. 2, 28. Februar 2007 (2007-02-28), Seiten 23705-23705, XP012103772 ISSN: 0034-6748
- R. HEINTZMANN, T. JOVIN: "Saturated patterned excitation microscopy - a concept for optical resolution improvement" J. OPT. SOC. AM. A, Bd. 19, Nr. 8, August 2002 (2002-08), Seiten 1599-1609, XP002529109 in der Anmeldung erwähnt

## Beschreibung

### Stand der Technik

Die sogenannte SPIM-Technologie (Selective-Plane-Illumination-Microscopy) ist beispielsweise in Stelzer et al. [1-4] als Mikroskopie-Verfahren beschrieben worden:
[1] Stelzer et al., Optics Letters 31, 1477 (2006).
[2] Stelzer et al., Science 305, 1007 (2004).
[3] DE 102 57 423 A1
[4] WO 2004/0530558 A1

Wie die konfokale Laser-Scanning-Mikroskopie erlaubt SPIM als Weitfeldtechnik die Aufnahme von 3D-Objekten in Form optischer Schnitte, wobei die Vorteile vor allem in der Geschwindigkeit, dem geringen Ausbleichen der Probe sowie einer erweiterten Eindringtiefe zu suchen sind. In der Regel werden hierzu Fluorophore in der Probe mit Laserlicht in Form eines Lichtblattes angeregt. Das Lichtblatt kann durch die Probe gescannt werden.

Durch die (rechnerische) Kombination von Bildern, die aus unterschiedlichen Winkeln aufgenommen wurden, lässt sich eine kugelförmige PSF erzeugen. Deren Ausdehnung ist in der Regel durch die laterale Auflösung des verwendeten Detektionsobjektivs bestimmt, welche insgesamt die erreichbare optische Auflösung im herkömmlichen SPIM-Verfahren beschränkt.

In Breuninger et al., Optics Letters, Vol. 32, No. 13, 2007 ist das SPIM Verfahren mit einem periodisch strukturierten Lichtblatt beschrieben. Durch das periodisch strukturierte Lichtblatt erfolgt die Fluoreszenzanregung an den Orten hoher Intensität. Die Strukturierung wird zur Unterdrückung von Streulicht aus außerfokalen Ebenen und zur Auflösungssteigerung durch strukturierte Beleuchtung verwendet (siehe weiter unten im Text, Heintzmann et al.).

In WO2006/127692 ist das sogenannte PALM-Verfahren (photoactivated light microscopy) beschrieben. Das Verfahren beruht auf der Photoaktivierung einzelner gemäß den Ausdehnungen der Detektions-PSF voneinander getrennter Moleküle und deren hochgenauen Lokalisierung durch Fluoreszenzdetektion beruht.

Das PALM-Verfahren so wie in WO2006/127692 beschrieben, verwendet im wesentlichen folgende primäre Schritte zur Erzeugung eines mikroskopischen Bildes mit einer gegenüber dem Standardmikroskop erhöhten optischen Auflösung:
1.) Photoaktivierung von Einzelmolekülen: Durch die Aktivierung werden die Fluoreszenzeigenschaften der Moleküle geändert (Ein-/Ausschalten, Änderung des Emissionsspektrum, ...), wobei die Aktivierung so erfolgt, dass der Abstand zwischen aktivierten Molekülen größer gleich der optischen Auflösung des Standardmikroskops (gegeben durch Abbesches Auflösungsgrenze) ist.
2.) Anregung der aktivierten Moleküle und Lokalisieren der Moleküle mit einem ortsauflösenden Detektor.
3.) Deaktivieren der aktivierten Moleküle.
4.) Wiederholung der Schritte 1-3 und Überlagerung der Lokalisationspunkte aus Schritt 2.), die aus verschiedenen Iterationschritten gewonnen wurden zu einem hochaufgelösten Bild.

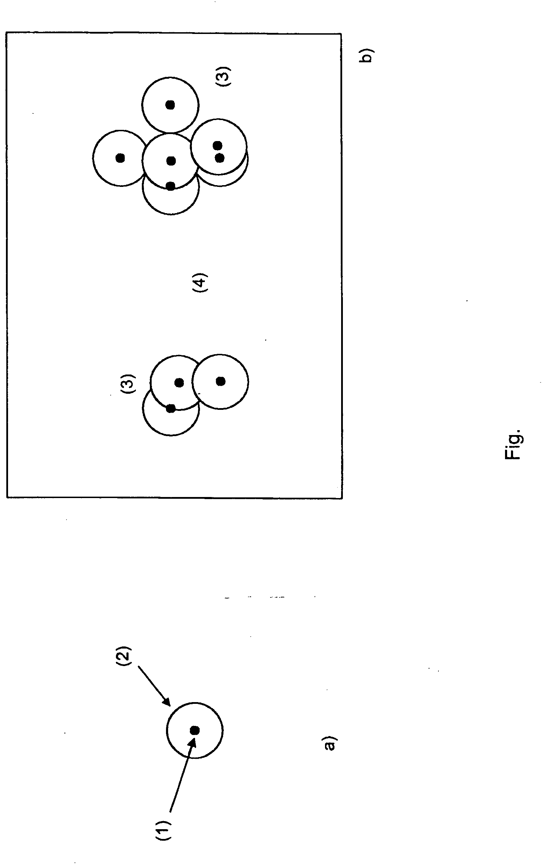

Die Aktivierung erfolgt vorzugsweise in Weitfeldbeleuchtung und statistisch verteilt. Durch die Wahl der Aktivierungsenergie wird versucht, zu erreichen, dass möglichst wenige / keine Moleküle (1) mit überlappenden Beugungsscheibchen (2) auf der Kamera entstehen (siehe Abb. 1a). Überlappende Beugungsscheibchen werden jedoch in Kauf genommen und können nicht ausgewertet werden ((3) in Abb. 1b). Es entstehen dadurch Regionen, bei denen der Abstand zwischen den aktivierten Molekülen größer bzw. sehr viel größer als das Beugungsscheibchen auf der Kamera ist (4). Durch die statistische Aktivierung der Moleküle müssen für die Generierung eines hochaufgelösten Bildes zur Bestimmung der Positionen der Moleküle etwa 10000 Einzelbilder ausgewertet werden. Hierdurch müssen große Datenmengen prozessiert werden und die Messung wird verlangsamt (ca. 1 min pro hochaufgelösten Bild). Die Verrechnung der Einzelbilder zu einem hochaufgelösten Bild erfordert ca. 4h.

Die Anwendung des PALM-Verfahrens in der 3D-Abbildung bereitet Schwierigkeiten, da auch Moleküle außerhalb der Fokusebene aktiviert und damit geblichen werden, ohne dass ihr Fluoreszenzlicht bei der Bildgebung ausgenutzt werden könnte. Vor allem wird bei biologischen Proben im gesamten Fokuskegel Autofluoreszenzlicht angeregt, welches als Störsignal zu werten ist und den Kontrast extrem herabsetzt.

Hierdurch wird die Aufnahme eines z-Scan verhindert, so dass keine 3D-Abbildung der Probe gewonnen werden kann.

Zur Vermeidung der Photoaktivierung und störender Autofluoreszenz außerhalb der Fokusebene wird in der WO2006/127692 die Verwendung einer Mehrphotonenanregung beschrieben. Diese Anordnung ist jedoch technisch aufwendig. Beispielsweise müssen die Farbstoffe (PA-GFP) nichtlinear aktivierbar sein und es müssen hohe Intensitäten eingesetzt werden, die zu Farbstoffschädigung bzw. Probenschädigung führen können.

Eine weitere eingesetzte Methode zur Vermeidung des Autofluoreszenz-Problems ist die Kombination des PALM-Verfahrens mit der TIRF-Technologie, wo das Anregungsvolumen in z-Richtung aufgrund der Beschränkung auf evaneszenten Wellen sehr klein gehalten wird. Mit TIRF ist allerdings keine 3D-Bildgebung machbar.

PALM bietet prinzipiell durch die ortsaufgelöste Detektion zunächst nur eine Verbesserung der lateralen Auflösung. Die axiale Auflösung ist in erster Linie durch die Ausdehnung der verwendeten Detektions-PSF bestimmt. Dies ist ein weiterer Grund für die Kombination von PALM mit der TIRF-Technologie, die eine hohe axiale Auflösung bietet (siehe auch WO2006/127692).

Neben PALM sind andere auflösungssteigernde Verfahren bekannt, in denen die Probe so beleuchtet wird, dass eine durch Fluoreszenz detektierbare Region entsteht, die kleiner ist, als es dem Beugungslimit nach Abbe entspricht.

Dies gelingt durch eine nichtlineare Wechselwirkung nach verschiedenen Verfahren:
- Abregung zuvor angeregte Moleküle durch stimulierte Emission (STED, Klar and Hell, Opt.Lett. 24 (1999) 954-956)
- Abregung zuvor angeregte Moleküle durch Weiteranregung in einen höheren nicht fluoreszenzfähigen Zustand (Excited State Absorption, Watanabe et al., Optics Express 11 (2003) 3271)
- Entvölkerung des Grundzustandes durch Tripletbesetzung (Ground State Depletion, Hell and Kroug, Appl. Phys. B 60 (1995), 495-497)
- Schalten eines Farbstoffs zwischen einem fluoreszierenden und nicht fluoreszierenden, weniger fluoreszierenden oder anders (wie andere Emissionswellenlänge, Polarisation) gekennzeichneten fluoreszierenden Zustand (Hell, Jakobs, and Kastrup, Appl. Phys. A 77 (2003) 859-860)

In der Regel handelt es sich dabei um punktscannende Verfahren, die Nachteile hinsichtlich einer schnellen Datenaufnahme bieten. Zudem wird die Probe in außerfokalen Bereichen unnötig belastet.

Heintzmann et al. (R. Heintzmann, T.M. Jovin und C. Cremer, "Saturated patterned excitation microscopy - a concept for optical resolution improvement", JOSA A 19, 1599-1609 (2002).) schlagen als weiteres Konzept zur Auflösungssteigerung einen nichtlinearen Prozess in Form der direkten Sättigung eines Fluoreszenzübergangs vor. Die erhöhte Auflösung beruht dabei auf einer periodisch gitterförmig strukturierten Beleuchtung der Probe, wodurch ein Transfer hoher Objektraumfrequenzen in den Bereich der optischen Übertragungsfunktion des Mikroskops erfolgt. Der Transfer kann indirekt durch theoretische Nachbearbeitung der Daten nachvollzogen werden. Auch bei diesen Verfahren ist als nachteilig anzusehen, dass die Probe in außerfokalen Bereichen unnötig belastet wird, da die strukturierte Beleuchtung den gesamten Probenraum durchsetzt. Außerdem ist das Verfahren derzeitig nicht bei dicken Proben einsetzbar, da die außerfokal angeregte Fluoreszenz als Untergrundsignal mit auf den Detektor gelangt und somit den Dynamikbereich reduziert.

### Gegenstand und Darstellung der Erfindung

Aufgabe der Erfindung ist es, die Nachteile der oben beschriebenen Verfahren zu vermeiden. Die Erfindung beschreibt Verfahren und Anordnung zur Realisierung eines PALM-Mikroskopes mit optimierter Photoaktivierung zur Realisierung einer höheren Bildrate. Gegenüber PALM wird eine Hochauflösung mit 3D-Bildgebung ohne nichtlineare Photoaktivierung erzielt. Eine PALM-TIRF-Kombination zur Reduktion der außerfokalen Autofluoreszenz ist nicht erforderlich.

Die Erfindung wird durch den Anspruch 1 definiert.

Es kann die vorteilhafte Verwendung des MultiView-Verfahrens (mehrere Beleuchtungswinkel auf der Probe) zur Erzielung einer erhöhten Eindringtiefe und einer isotropen optischen Auslösung in x, y, z erfolgen.

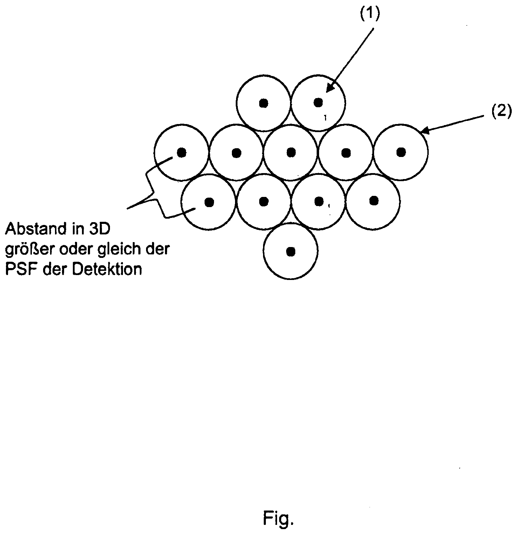

Es erfolgt eine Aktivierung entsprechend Abb. 2 möglichst vieler Moleküle ohne "Lücken" ((4) in Abb. 1b) und ohne dass sich die Beugungsscheibchen der Moleküle auf der Kamera überlagern ((3) in Abb. 1b). Setzt man die Beugungsscheibchen der Einzelmoleküle aneinander so ergibt sich vorzugsweise eine dichte Kugelpackung.

Hierdurch wird eine Erhöhung der Geschwindigkeit des PALM-Verfahrens und eine Reduktion der Anzahl der Einzelbilder erreicht.

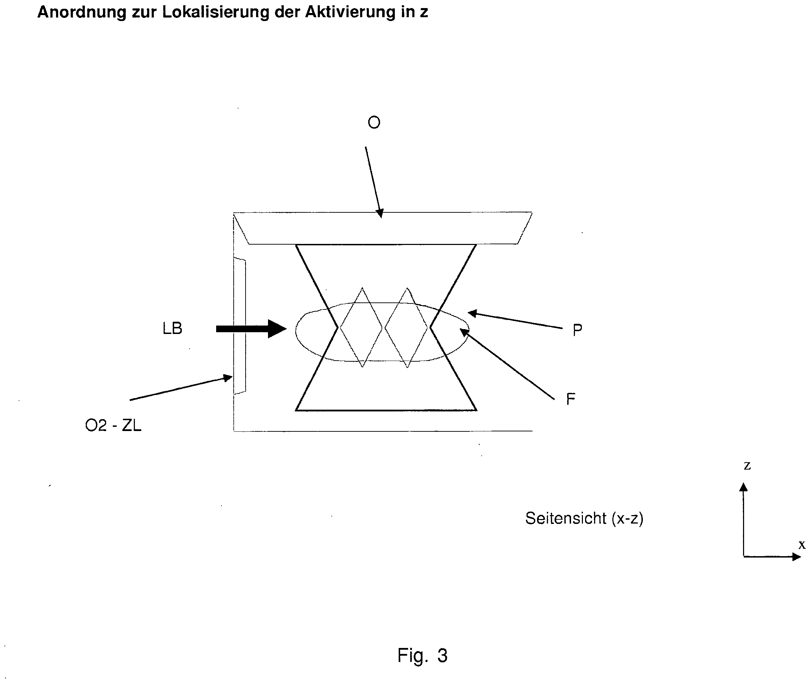

Die erfindungsgemäßen Anordnungen und ihre Wirkungen sowie Vorteile werden anhand der Abbildungen 3-7 näher beschrieben.
Erfindungsgemäß wird vorteilhaft eine überraschend vorteilhafte Verbindung des SPIM-Verfahrens mit dem PALM-Verfahren vorgeschlagen.

Fig. 3 zeigt schematisch von der Seite (Einstrahlungsrichtung gleich Blickrichtung) ein flächenhaftes Lichtblatt LB, auch Lichtscheibe genannt, das beispielsweise mit einer Zylinderlinse (O2 - ZL) erzeugt wird und durch die Probe (P) geht.
Oberhalb der Probe befindet sich ein Objektiv O eines Mikroskopes, beispielsweise eines Weitfeldmikroskopes mit einer CCD Kamera, eines Laser-Scanning-Mikroskopes oder eines Mikroskops mit strukturierter Beleuchtung.
Durch das seitlich in die Probe eingestrahltes Lichtblatt LB in Form des SPIM-Lichtblattes, das im Wesentlichen genau in der Fokusebene (F) des Objektivs O liegt, erfolgt in Fig. 3 eine Photoaktivierung senkrecht zur optischen Achse der Fluoreszenzanregung und -detektion. Die Fluoreszenzanregung kann hierbei nur innerhalb der Fokusebene (F) erfolgen. Die Fluoreszenzanregung und die Fluoreszenzdetektion erfolgt gemäß WO2006/127692 über das Mikroskopobjektiv O. Somit erfolgt eine lokalisierte Anregung in z-Richtung und es können Proben dreidimensional ohne nichtlineare Photoaktivierung mit dem PALM-Verfahren untersucht werden.
Die Breite des Lichtstrahls zur Photoaktivierung, d.h. seine Ausdehnung in z-Richtung, ist so angepasst, dass sie vorteilhaft kleiner oder gleich der durch die numerische Apertur des Objektivs O gegebenen axialen Ausdehnung der PSF ist. Hierdurch wird vorteilhaft vermieden, dass Fluoreszenzmoleküle außerhalb der Fokusebene aktiviert und geblichen werden. Zusätzlich kann eine Fluoreszenz nur noch aus dieser durch den Aktivierungsstrahl definierten Ebene kommen. Somit ist diese Anordnung inhärent 3D auflösend.
Die Detektion erfolgt mit herkömmlichen Mitteln, wie beispielsweise durch klassische Weitfeldmikroskopie, konfokale Mikroskopie oder strukturierte Beleuchtung (ZEISS APOTOM).

Allerdings besteht hier das Problem, dass der Anregungsstrahl über den gesamten Probenraum Autofluoreszenz anzuregen vermag. Dies kann dadurch verhindert werden, in Abb. 3 zusätzlich der Lichtstrahl zur Anregung der Fluoreszenz (nach Photoaktivierung) mit einem Lichtblatt (LB) senkrecht zur Detektion über O2 - ZL eingestrahlt wird. Hierdurch wird gewährleistet, dass keine außerfokalen Autofluoreszenzsignale generiert werden, die sich störend auf die Bildgebung auswirken. Zusätzlich kann das Fluoreszenzlicht besonders effizient vom Anregungslicht getrennt detektiert werden, da keine spektrale Separierung mittels eines dichroitischen Strahlteilers erforderlich ist. Bei einigen schaltbaren Farbstoffen wie beispielsweise DENTRA erfolgt die Photoaktivierung und Fluoreszenzanregung mit der gleichen Wellenlänge. Dies kann hiermit besonders einfach realisiert werden.

Es ist weiterhin eine Anordnung denkbar, in der die Photoaktivierung über das Objektiv O. und die Fluoreszenzanregung über das seitlich eingestrahlte Lichtblatt O2 erfolgt. Das Objektiv O dient weiterhin zur Detektion. Auch hier wird außerfokales Autofluoreszenzlicht vermieden. Außerfokale Autofluoreszenz, welche durch den Aktivierungsstrahl generiert wird, lässt sich spektral, insbesondere aber auch zeitlich (die Fluoreszenzanregung erfolgt nach der Aktivierung) von dem eigentlich interessierenden Fluoreszenzsignal separieren.
Ein Problem stellt bei dieser Methode die Generierung von außerfokal aktivierten Molekülen dar. Es ist daher bei dieser Methode vorteilhaft, Moleküle einzusetzen, die sich nach der Aufnahme einer Bildebene über den gesamten Probenbereich z.B. durch eine Weitlichtbeleuchtung deaktivieren lassen.

Die Aufnahme des hochaufgelösten Bildes erfolgt für die erfindungsgemäßen Anordnungen wie in WO2006/127692 beschrieben mit den obengenannten Schritten 1-4. Als aktivierbare Fluoreszenzfarbstoffe werden vorzugsweise aus dem Stand der Technik bekannte fluoreszierende Proteine wie PA-GFP oder auch DRONPA verwendet. Die Photoaktivierung erfolgt hierbei mit 405 nm, die Fluoreszenzanregung mit 488 nm und die Detektion im Bereich oberhalb von 490 nm. Weiterhin können auch reversibel schaltbare synthetische Farbstoffe wie Alexa / Cyan Konstrukte eingesetzt werden.

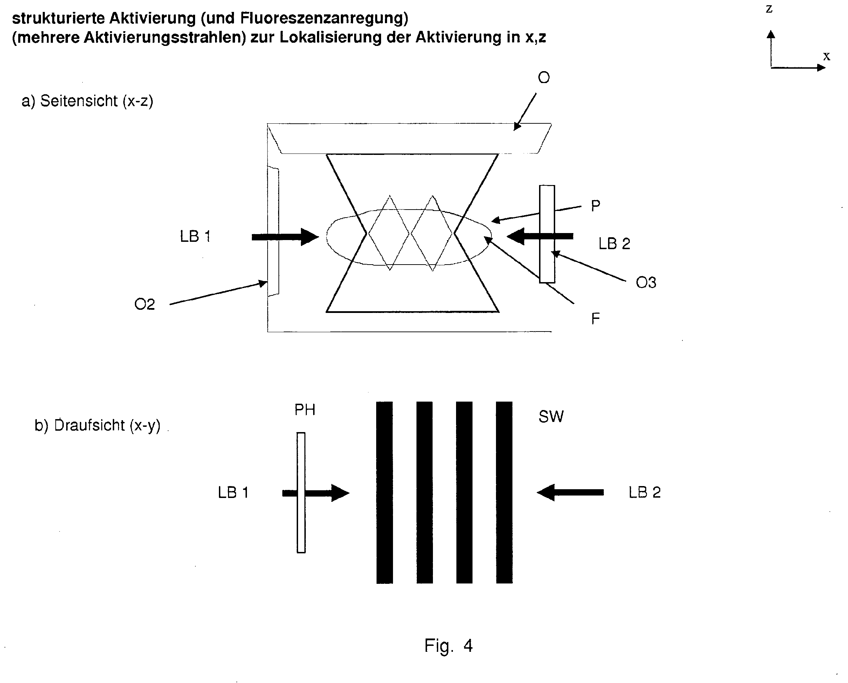

In Abb. 4a ist schematisch eine weitere erfindungsgemäße Anordnung mit einer Beleuchtung mittels zweier Lichtblätter LB 1 und LB 2 dargestellt. Durch die interferometrische Überlagerung von Lichtblättern aus mehreren Richtungen (aber in der durch die Detektion definierten Fokusebene) entsteht ein Interferenzmuster entlang der eingezeichneten x-Richtung in der Fokusebene. Die Lichtblätter können wiederum Laserlicht zur Photoaktivierung und / oder Fluoreszenzanregung enthalten. Durch die Überlagerung bildet sich ein so genanntes Stehwellenfeld (SW), welches schematisch in Abb. 4b als Streifenmuster gezeigt ist. Werden beispielsweise zwei Lichtblätter für die Photoaktivierung verwendet, so kann erreicht werden, dass der Abstand der zu aktivierenden Fluoreszenzemitter größer oder gleich der Breite der PSF der Detektion (O in Abb. 4a) ist. Hierdurch entstehen vorzugsweise keine sich entlang der x-Richtung räumlich überlagernden Fluoreszenzemitter, die zusätzlich in der z-Richtung am Ort der Fokusebene F lokalisiert sind. Die Detektion erfolgt wiederum analog der Anordnung nach Abb. 3. Ein Verschieben des Stehwellenfeldes in der Fokusebene zur Beleuchtung der Probe in den Intensitätsminima erfolgt durch die Einstellung der relativen Phase zwischen den beiden Lichtblättern beispielsweise mit einem Phasenmodulator (PH).

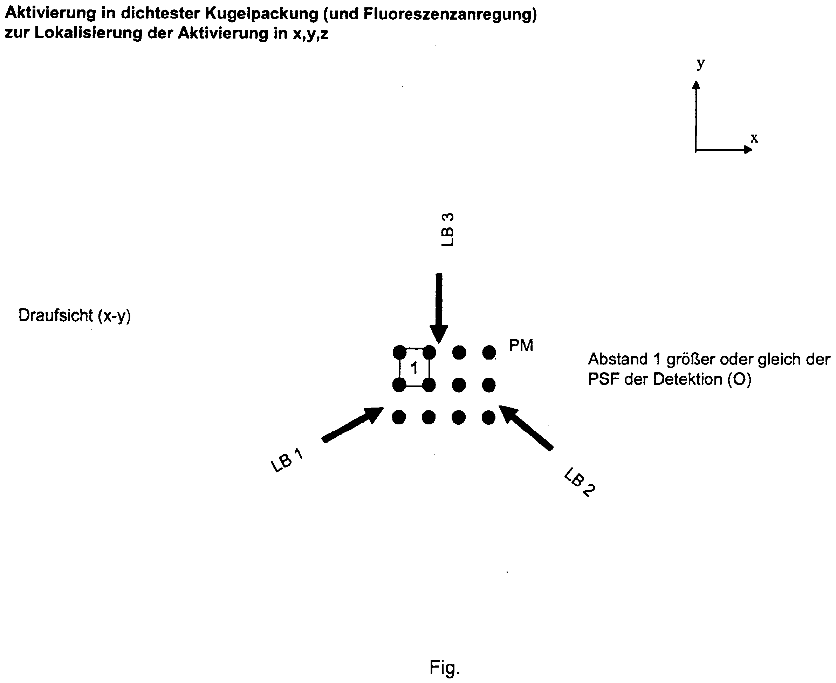

Bei Verwendung von 2 Strahlen entsteht durch Interferenz eine streifenförmige, in x und z lokalisierte Aktivierung. Bei Einstrahlung von mehr als zwei, vorteilhaft drei Lichtblättem LB 1 bis LB 3 (120° Winkel) entsteht wie in Fig. 5 dargestellt ein Punktmuster PM, das heißt eine in x, z und y lokalisierte Aktivierung, so dass der Abstand (1) der aktivierten Fluoreszenzemitter größer oder gleich der Breite der PSF der Detektion (O in Abb. 4a) ist. Die Fluoreszenzanregung kann vorzugsweise ebenfalls über eines oder mehrere Lichtblätter erfolgen, wodurch wiederum außerfokale Autofluoreszenz vermieden wird.

Die Fluoreszenzanregung aus Richtung O in Abb. 4a kann auch in einer oder mehreren Richtungen strukturiert sein und beispielsweise auch ein Lochmuster aufweisen (Strukturierung in x und y). Hierdurch kann sichergestellt werden, dass der Abstand der Fluoreszenzemitter größer oder gleich der Breite der PSF der Detektion ist. Eine derartige Strukturierung kann beispielsweise mit einer Gitterstruktur erfolgen (DE 10257237A1) oder mit einer Multispotanregung (DE102006017841) erfolgen.

Weiterhin kann die Photoaktivierung über das Objektiv O. erfolgen und die Fluoreszenzanregung mit mehreren Lichtscheibenstrahlen realisiert werden, die ein Interferenzmuster der oben beschriebenen Art ausbilden. Moleküle, die mit sich überlappenden Beugungsscheibchen aktiviert wurden, werden so unterschiedlich stark angeregt. Auch auf diese Weise werden Lücken im Kamerabild vermieden. Durch den Aktivierungsstrahl generierte Autofluoreszenz lässt sich zeitlich und/oder spektral separieren. Nach der Aufnahme einer Ebene muss für 3D-Aufnahmen eine Deaktivierung über den Probenbereich erfolgen.

Erfolgt die Photoaktivierung durch das Objektiv O, so kann die strukturierte Aktivierung auch durch eine spezielle Abbildung (z. B. eines Gitters - wie oben beschrieben) oder durch einen Scan-Mechanismus realisiert werden. Der Lichtstrahl kann hierzu beispielsweise das Bildfeld abtasten und wird in seiner Intensität während der Bewegung durch beispielsweise einen schnellen AOTF so verändert, dass ein Aktivierungsmuster beispielsweise entsprechend Fig. 5 in der Fokusebene entsteht. Bei diesem Verfahren werden allerdings auch Moleküle außerhalb der Fokusebene aktiviert. Durch eine seitliche Lichtblatt-Fluoreszenzanregung kann sichergestellt werden, dass dennoch nur Fluoreszenz aus der Fokusebene detektiert wird. Nach der Aufnahme einer Ebene muss für 3D-Aufnahmen allerdings eine Deaktivierung über den Probenbereich erfolgen. Die Intensität des Aktivierungsstrahls ist idealerweise so zu wählen, dass im statistischen Mittel nur ein Molekül pro Aktivierungsspot (entspricht ca. PSF-Größe) angeregt wird. Auf diese Weise wird die Wahrscheinlichkeit vermindert, dass 2 Moleküle mit sich überlagernden Beugungsscheibchen gleichzeitig aktiviert werden. Im Verlauf der Bildaufnahme muss das Aktivierungsmuster selbstverständlich phasenverschoben werden, damit alle Moleküle gleichmäßig aktiviert werden. Durch den Aktivierungsstrahl generierte Autofluoreszenz lässt sich zeitlich und/oder spektral separieren. Die Aktivierungsintensitäten sind in der Regel aber so klein, dass Autofluoreszenz keine Rolle spielen sollte.

Der Photoaktivierungs- und Fluoreszenzanregungsstrahl können hierbei vertauscht werden. Dies hat den Vorteil, dass außerhalb der Fokusebene keine Photoaktivierung geschieht. Dazu kann die Aktivierung unstrukturiert über das Lichtblatt und die Anregung auf die PSF abgestimmt strukturiert über das Objektiv durchgeführt werden. Moleküle, die mit sich überlappenden Beugungsscheibchen aktiviert wurden, werden so unterschiedlich stark angeregt. Auch auf diese Weise können Lücken im Kamerabild vermieden werden. Allerdings besteht hier das Problem der außerfokalen Autofluoreszenz.

Ein Problem bei allen beschriebenen Varianten stellt die axiale Auflösung dar, die im SPIM-Verfahren generell durch die Breite des verwendeten Lichtblattes bestimmt ist. Da die zu dessen Erzeugung verwendete NA in der Regel sehr viel kleiner als die NA des Detektionsobjektivs ist, ergibt sich direkt das Problem einer stark elongierten System-PSF (laterale Ausdehnung bestimmt durch die Auflösung des PALM-Verfahrens (Nanometer-Bereich), axiale Ausdehnung bestimmt durch die Lichtblattbreite (Micrometer-Bereich). Dies bereitet Nachteile bei der 3D-Abbildung. Mit Hilfe der aus dem Stand der Technik bekannten Multiview-Technik (Aufnahme von Stapeln aus unterschiedlichen Winkeln) kann dieses Problem umgangen werden und eine effektive, weitgehend homogene räumliche Auflösung entsprechend der lateralen PALM-Auflösung erzeugt werden.

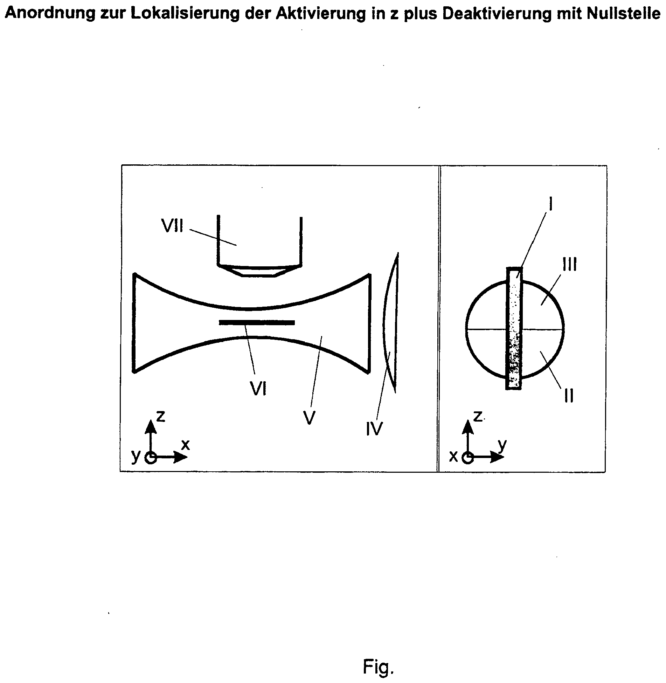

Als besonders vorteilhaft erweist sich, wenn die photoaktivierten Moleküle in den Randbereichen des zur Aktivierung verwendeten Lichtblattes durch ein weiteres strukturiertes Lichtblatt im Sinne einer nichtlinearen Wechselwirkung wieder deaktiviert werden, um eine höhere z-Auflösung zu erzielen. Dies kann durch eines der oben beschriebenen Verfahren, vorzugsweise einen Schaltprozess geschehen. Als Deaktivierungsstrahl kann ebenfalls ein Lichtblatt verwendet werden, dass aber so strukturiert ist, dass es in der Fokusebene über den Bereich des zu beobachtenden Bildbereichs eine Nullstelle aufweist, wie in Abb. 6 gezeigt. Die Pupillen-Intensitätsverteilung (I) des Lichtblattstrahls entspricht hier einer Linie, welche durch eine geeignete Optik (z.B. mit Powell-Linse) zuvor erzeugt wurde. In der Pupille ist eine Phasenplatte (II) eingebracht, die über die Hälfte der Linie einen Bereich (III) aufweist, der einen pi-Phasensprung erzeugt. Das in der xy-Ebene ausgedehnte Lichtblatt (V) wird durch eine geeignete Optik (IV) erzeugt. Es ergibt sich im Bereich der Schärfentiefe der Beleuchtungsoptik (IV) eine Nullstellenebene (VI) parallel zur Fokusebene der Detektionsoptik (VII), in der keine Moleküle abgeregt werden. Entsprechend den STED-artigen Verfahren kann hierdurch die axiale Ausdehnung des Lichtblattes mit photoaktivierten Molekülen in nichtlinearer Weise stark eingeschränkt und die axiale Auflösung verbessert werden.

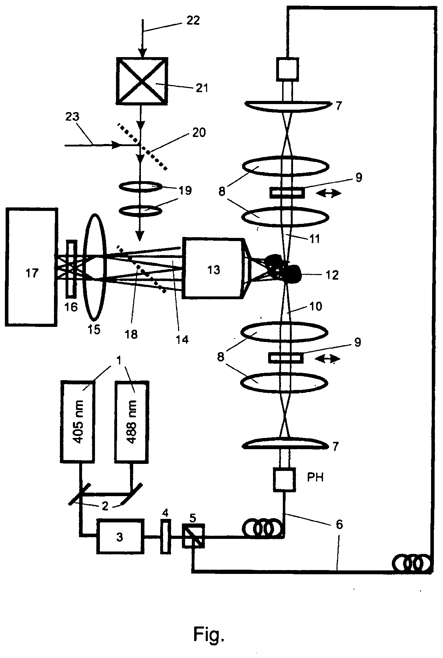

Abb. 7 zeigt ein allgemeines optischen Ausführungsbeispiel zur Verwendung der beschriebenen vorteilhaften Verfahren und Applikationen mit Photoaktivierung / -deaktivierung über (x-Richtung strukturiertes) Lichtblatt und CCD-Weitfelddetektion.

Die Probe ist beispielsweise mit Dronpa markiert und kann über 405 nm angeschaltet (aktiviert) werden und mit 488 nm angeregt bzw. wieder ausgeschaltet werden.
Die Laser (1) sind für 405 nm (Photoaktivierung) und 488 nm (Fluoreszenzanregung und Photodeaktivierung) vorgesehen und werden über eine Strahlvereinigung (2) und dichroitische Spiegel vereinigt. Für die Fotoaktivierung und Fluoreszenzanregung kann auch ein- und dieselbe Wellenlänge wie oben am Beispiel DENTRA erläutert verwendet werden. Hierdurch kann dann ein Laser (405nm in diesem Falle) und die Strahlvereinigung (2) entfallen.
Ein AOTF (3) dient zur Wellenlängenselektion und zum schnellen Schalten / Abschwächen der Laserwellenlängen. Ihm ist in Beleuchtungsrichtung vorzugsweise eine drehbare lambda/2-Platte (4) und ein Polteiler (PBS) (5) mit Faserankopplung für 2 Kanäle nachgeordnet. Durch Drehung der lambda/2 Platte kann die Leistung in den beiden Kanälen eingestellt werden.
Über die singlemodigen Fasern (6) wird das Licht über Zylinderoptiken (7) zur Erzeugung eines Lichtblattes und Abbildungsoptiken (8) über Strahlengänge (10) bzw. (11) zur Photoaktivierung (oder auch Deaktivierung bzw. Anregung) auf die Probe (12) eingestrahlt. Zur Erzeugung von Nullstellen in der Fokusebene (x-Strukturierung) gemäß Abb. 4 sind die optischen Weglängen entsprechend angepasst. Ein Verschieben des Stehwellenfeldes in der Fokusebene zur Beleuchtung der Probe in den Intensitätsminima erfolgt durch die Einstellung der relativen Phase zwischen den beiden Lichtblättem beispielsweise mit einem Phasenmodulator (PH).
Das in der Probe (12) erzeugte Licht wird über ein Detektionsobjektiv (13) (Mikroskopobjektiv) in einem Detektionsstrahlengang (14) über eine Tubuslinse (15) und Emissionsfilter (16) mittels einer CCD-Kamera detektiert. Im Detektionsstrahlengang ist gestrichelt ein optionaler (einschwenkbarer) Farbteiler (18) zur Einspiegelung eines Lasers (22) oder einer Weitfeldlichtquelle (23) dargestellt, falls die Fluoreszenzanregung durch das Detektionsobjektiv erfolgt. Zwischen Laser und Weitfeldlichtquelle kann optional mit Hilfe eines einschwenkbaren Spiegels (20) gewählt werden. Der Laser (22) bzw. die Weitfeldlichtquelle (23) kann auch zu Aktivierung benutzt werden, wobei dann statt einer Wellenlänge von 488 nm eine Wellenlänge von 405 nm vorzusehen ist, wenn DRONPA als Farbstoff verwendet wird. Insbesondere ist für den Laserstrahlengang (22) eine Scannereinheit (21) vorgesehen, welche ein punktförmiges Abrastem des Bildfeldes erlaubt. Zwischen der Scannereinheit (21) und dem Farbteiler (18) ist eine hierfür angepasste Abbildungsoptik (19) vorgesehen.
Für die oben anhand von Abbildung 6 beschriebene z-Strukturierung des Lichtblatts können Phasenplatten (9) in die Beleuchtungsstrahlengänge eingebracht werden.

## Patentansprüche

1. Verfahren zum räumlich hochauflösenden Abbilden einer Struktur einer Probe mit den Schritten:
a) Auswählen einer Substanz aus einer Gruppe von Substanzen, die durch Photoaktivierung mindestens einmal aus einem ersten Zustand mit ersten optischen Eigenschaften in einen zweiten Zustand mit zweiten optischen Eigenschaften überführbar sind, indem die Fluoreszenzeigenschaften der Moleküle geändert werden,
b) Überführen wechselnder Anteile der Substanz in den zweiten Zustand durch Photoaktivierung, wobei mittels mindestens einer Lichtquelle eine Umschaltstrahlung erzeugt wird, um eine erste Untermenge der umschaltbaren Farbstoffmoleküle in der Probe in den zweiten Zustand umzuschalten, wobei die Umschaltung so erfolgt, dass der Abstand zwischen umgeschalteten Molekülen größer gleich der beugungsbegrenzten optischen Auflösung des Mikroskops ist, und eine Anregungsstrahlung ausgesendet wird, um die in den zweiten Zustand überführte erste Untermenge der umschaltbaren Farbstoffmoleküle zu Fluoreszenz anzuregen,
c) räumlich aufgelöstes Registrieren eines optischen Mess-Signals über ein Objektiv mit einem Detektor, das von den im zweiten Zustand befindlichen Farbstoffmolekülen ausgeht, und Lokalisieren der Moleküle,
d) Deaktivieren der aktivierten Moleküle und
e) Wiederholung der Schritte b), c), und d), wobei durch Überlagerung von Detektionsbildern ein hochaufgelöstes Bild zusammengesetzt wird,
**dadurch gekennzeichnet, dass**
die Überführung in den zweiten Zustand und/oder die Anregung zumindest näherungsweise senkrecht zur Detektionsrichtung und damit zur optischen Achse des Objektives erfolgt, wobei als Beleuchtungsbereich durch eine zumindest in einer Richtung linienartig fokussierte Beleuchtung ein flächiges Lichtblatt im Wesentlichen in der Fokusebene des Objektivs erzeugt wird.

1. Verfahren nach einem der vorangehenden Ansprüche,
wobei eine Deaktivierung von Molekülen mittels eines in z-Richtung strukturierten Lichtblatts erfolgt, so dass die Schicht der aktivierten Moleküle in z-Richtung weniger ausgedehnt ist, als es dem Abbeschen Auflösungsvermögen der Detektionsoptik bzw. der numerischen Apertur der Beleuchtungsoptik entspricht.

2. Verfahren nach einem der vorangehenden Ansprüche,
wobei die Aktivierung und/ oder Anregung eines Probenbereichs von einer Seite erfolgt.

2. Verfahren nach einem der vorangehenden Ansprüche,
wobei die Aktivierung und/ oder Anregung eines Probenbereichs von gegenüberliegenden Seiten erfolgt.

3. Verfahren nach einem der vorangehenden Ansprüche,
wobei die Aktivierung und/ oder Anregung eines Probenbereichs von mehr als zwei Seiten, vorzugsweise von 3 Seiten erfolgt.

3. Verfahren nach einem der vorangehenden Ansprüche,
wobei mehrere Lichtquellen zur Erzeugung von Interferenz gleiche Wellenlängen aufweisen.

4. Verfahren nach einem der vorangehenden Ansprüche,
wobei durch zwei Lichtquellen und Interferenz ein Streifenmuster in der Probe erzeugt wird.

4. Verfahren nach einem der vorangehenden Ansprüche,
wobei durch mindestens drei Lichtquellen und Interferenz ein Punktmuster in der Probe erzeugt wird.

5. Verfahren nach einem der vorangehenden Ansprüche,
wobei mehrere Lichtquellen durch Aufspaltung des Lichtes einer Lichtquelle gebildet sind.

5. Verfahren nach einem der vorangehenden Ansprüche,
wobei eine Anregung durch das Objektiv und die Aktivierung über das Lichtblatt erfolgt.

6. Verfahren nach einem der vorangehenden Ansprüche,
wobei Anregung und Aktivierung über das Lichtblatt erfolgt.

6. Verfahren nach einem der vorangehenden Ansprüche,
wobei das Anregungslicht eine Strukturierung aufweist.

7. Verfahren nach Anspruch 12,
wobei die Strukturierung durch ein im Anregungsstrahlengang angeordnetes Gitter erzeugt ist.

7. Verfahren nach einem der vorangehenden Ansprüche,
wobei das Anregungslicht eine Punktverteilung aufweist.

8. Verfahren nach einem der vorangehenden Ansprüche,
wobei die Aktivierung durch das Objektiv und die Anregung über das Lichtblatt erfolgt und das Aktivierungslicht durch eine modulierte Scanbewegung oder eine Gitterabbildung ein Aktivierungsmuster aufweist.

8. Verfahren zum räumlich hochauflösenden Abbilden einer Struktur einer Probe mit den Schritten:
a) Auswählen einer Substanz aus einer Gruppe von Substanzen, die durch Photoaktivierung mindestens einmal aus einem ersten Zustand mit ersten optischen Eigenschaften in einen zweiten Zustand mit zweiten optischen Eigenschaften überführbar sind, indem die Fluoreszenzeigenschaften der Moleküle geändert werden,
b) Überführen wechselnder Anteile der Substanz in den zweiten Zustand durch Photoaktivierung, wobei mittels mindestens einer Lichtquelle eine Umschaltstrahlung erzeugt wird, um eine erste Untermenge der umschaltbaren Farbstoffmoleküle in der Probe in den zweiten Zustand umzuschalten, wobei die Umschaltung so erfolgt, dass der Abstand zwischen umgeschalteten Molekülen größer gleich der beugungsbegrenzten optischen Auflösung des Mikroskops ist, und eine Anregungsstrahlung ausgesendet wird, um die in den zweiten Zustand überführte erste Untermenge der umschaltbaren Farbstoffmoleküle zu Fluoreszenz anzuregen
c) räumlich aufgelöstes Registrieren eines optischen Mess-Signals über ein Objektiv mit einem Detektor, das von den im zweiten Zustand befindlichen Farbstoffmolekülen ausgeht, und Lokalisieren der Moleküle,
d) Deaktivieren der aktivierten Moleküle und
e) Wiederholung der Schritte b), c), und d), wobei durch Überlagerung von Detektionsbildern ein hochaufgelöstes Bild zusammengesetzt wird,
**dadurch gekennzeichnet, dass**
die Überführung in den zweiten Zustand und/oder die Anregung zumindest näherungsweise senkrecht zur Detektionsrichtung und damit zur optischen Achse des Objektives erfolgt, wobei als Beleuchtungsbereich durch eine zumindest in einer Richtung linienartig fokussierte Beleuchtung ein flächiges Lichtblatt im Wesentlichen in der Fokusebene des Objektivs erzeugt wird, und wobei die Anregungsstrahlung eine Strukturierung aufweist

9. Verfahren nach einem der vorangehenden Ansprüche, wobei eine Deaktivierung von Molekülen mittels eines in z-Richtung strukturierten Lichtblatts erfolgt, so dass die Schicht der aktivierten Moleküle in z-Richtung weniger ausgedehnt ist, als es dem Abbeschen Auflösungsvermögen der Detektionsoptik bzw. der numerischen Apertur der Beleuchtungsoptik entspricht.

9. Verfahren nach einem der vorangehenden Ansprüche,
wobei die Aktivierung und/ oder Anregung eines Probenbereichs von einer Seite erfolgt.

10. Verfahren nach einem der vorangehenden Ansprüche,
wobei die Aktivierung und/oder Anregung eines Probenbereichs von gegenüberliegenden Seiten erfolgt.

10. Verfahren nach einem der vorangehenden Ansprüche,
wobei die Aktivierung und/ oder Anregung eines Probenbereichs von mehr als zwei Seiten, vorzugsweise von 3 Seiten erfolgt.

11. Verfahren nach einem der vorangehenden Ansprüche,
wobei mehrere Lichtquellen zur Erzeugung von Interferenz gleiche Wellenlängen aufweisen.

11. Verfahren nach einem der vorangehenden Ansprüche,
wobei durch zwei Lichtquellen und Interferenz ein Streifenmuster in der Probe erzeugt wird.

12. Verfahren nach einem der vorangehenden Ansprüche,
wobei durch mindestens drei Lichtquellen und Interferenz ein Punktmuster in der Probe erzeugt wird.

12. Verfahren nach einem der vorangehenden Ansprüche,
wobei mehrere Lichtquellen durch Aufspaltung des Lichtes einer Lichtquelle gebildet sind.

13. Verfahren nach einem der vorangehenden Ansprüche, wobei eine Anregung durch das Objektiv und die Aktivierung über das Lichtblatt erfolgt.

13. Verfahren nach einem der vorangehenden Ansprüche,
wobei Anregung und Aktivierung über das Lichtblatt erfolgt.

14. Verfahren nach einem der vorangehenden Ansprüche,
wobei die Strukturierung der Anregungsstrahlung durch ein im Anregungsstrahlengang angeordnetes Gitter erzeugt wird.

14. Verfahren nach einem der vorangehenden Ansprüche,
wobei das Anregungslicht eine Punktverteilung aufweist.

15. Verfahren nach einem der vorangehenden Ansprüche,
wobei die Aktivierung durch das Objektiv und die Anregung über das Lichtblatt erfolgt und das Aktivierungslicht durch eine modulierte Scanbewegung oder eine Gitterabbildung ein Aktivierungsmuster aufweist.

## Claims

1. Method for high spatial resolution imaging of a structure of a sample, comprising the steps of:
a) selecting a substance from a group of substances that are transferable by way of photoactivation at least once from a first state with first optical properties into a second state with second optical properties by changing the fluorescence properties of the molecules,
b) transferring changing proportions of the substance into the second state by way of photoactivation, wherein switching radiation is generated by means of at least one light source in order to switch a first subset of the switchable dye molecules in the sample into the second state, wherein the switching is effected such that the distance between switched molecules is greater than or equal to the diffraction-limited optical resolution of the microscope, and excitation radiation is emitted to excite the first subset of the switchable dye molecules that have been transferred into the second state to fluoresce,
c) spatially resolved registering an optical measurement signal emanating from the dye molecules that are in the second state via an objective using a detector, and locating the molecules,
d) deactivating the activated molecules, and
e) repeating steps b), c) and d), wherein a high-resolution image is composed by overlaying detection images,
**characterized in that**
the transfer into the second state and/or the excitation takes place at least approximately perpendicularly to the detection direction and thus to the optical axis of the objective, wherein a two-dimensional light sheet is produced as the illumination region substantially in the focal plane of the objective by way of illumination that is focused in the manner of a line at least in one direction.

2. Method according to one of the preceding claims, wherein deactivation of molecules is effected by means of a light sheet that is structured in the z-direction so that the layer of the activated molecules in the z-direction is less extensive than corresponding to the Abbe resolution of the detection optical unit or the numerical aperture of the illumination optical unit.

3. Method according to either of the preceding claims, wherein the activation and/or excitation of a sample region is effected from one side.

4. Method according to one of the preceding claims, wherein the activation and/or excitation of a sample region is effected from opposite sides.

5. Method according to one of the preceding claims, wherein the activation and/or excitation of a sample region is effected from more than two sides, preferably from three sides.

6. Method according to one of the preceding claims, wherein a plurality of light sources have the same wavelengths to produce interference.

7. Method according to one of the preceding claims, wherein a fringe pattern is produced in the sample by way of two light sources and interference.

8. Method according to one of the preceding claims,
wherein a dot pattern is produced in the sample by way of at least three light sources and interference.

9. Method according to one of the preceding claims, wherein a plurality of light sources are formed by splitting the light from one light source.

10. Method according to one of the preceding claims, wherein excitation is effected by way of the objective and the activation is effected via the light sheet.

11. Method according to one of the preceding claims, wherein excitation and activation are effected via the light sheet.

12. Method according to one of the preceding claims, wherein the excitation light exhibits structuring.

13. Method according to Claim 12,
wherein the structuring is produced by a grating arranged in the excitation beam path.

14. Method according to one of the preceding claims, wherein the excitation light has a dot distribution.

15. Method according to one of the preceding claims, wherein the activation is effected by way of the objective and the excitation is effected via the light sheet and the activation light exhibits an activation pattern owing to a modulated scanning movement or grating imaging.

## Revendications

1. Procédé de représentation à haute résolution spatiale d'une structure d'un échantillon, comprenant les étapes suivantes :
a) sélection d'une substance d'un groupe de substances, qui peuvent être transférées au moins une fois par photoactivation d'un premier état ayant des premières caractéristiques optiques en un deuxième ayant des deuxièmes caractéristiques optiques en modifiant les caractéristiques de fluorescence des molécules,
b) transfert de fractions alternées de la substance dans le deuxième état par photoactivation, un rayonnement de permutation étant généré au moyen d'au moins une source de lumière afin de permuter un premier sous-ensemble des molécules de matière colorante permutables dans l'échantillon dans le deuxième état, la permutation s'effectuant de telle sorte que l'écart entre les molécules permutées est égal ou supérieur à la résolution optique limitée par diffraction du microscope, et un rayonnement d'excitation est émis afin d'exciter en fluorescence le premier sous-ensemble des molécules de matière colorante permutables transféré dans le deuxième état,
c) enregistrement avec résolution spatiale d'un signal de mesure optique par le biais d'un objectif avec un détecteur, qui émane des molécules de matière colorante se trouvant dans le deuxième état, et localisation des molécules,
d) désactivation des molécules activées et
e) répétition des étapes b), c) et d), une image à haute résolution étant assemblée par superposition des images de détection,
**caractérisé en ce que**
le transfert dans le deuxième état et/ou l'excitation s'effectue au moins approximativement perpendiculairement à la direction de détection et ainsi à l'axe optique de l'objectif, la zone d'éclairage étant une lame de lumière plate sensiblement dans le plan focal de l'objectif générée par un éclairage concentré de manière linéaire au moins dans une direction.

2. Procédé selon l'une des revendications précédentes, une désactivation des molécules s'effectuant au moyen d'une lame de lumière structurée dans la direction Z, de sorte que la couche des molécules activées dans la direction Z soit moins étendue que celle qui correspond à la capacité de résolution d'Abbé de l'optique de détection ou à l'ouverture numérique de l'optique d'éclairage.

3. Procédé selon l'une des revendications précédentes, l'activation et/ou l'excitation d'une zone de l'échantillon s'effectuant depuis un côté.

4. Procédé selon l'une des revendications précédentes, l'activation et/ou l'excitation d'une zone de l'échantillon s'effectuant depuis des côtés opposés.

5. Procédé selon l'une des revendications précédentes, l'activation et/ou l'excitation d'une zone de l'échantillon s'effectuant depuis plus de deux côtés, de préférence depuis 3 côtés.

6. Procédé selon l'une des revendications précédentes, plusieurs sources de lumière destinées à générer des interférences possédant des longueurs d'onde identiques.

7. Procédé selon l'une des revendications précédentes, un modèle de bandes étant généré dans l'échantillon par deux sources de lumière et des interférences.

8. Procédé selon l'une des revendications précédentes, un modèle de points étant généré dans l'échantillon par au moins trois sources de lumière et des interférences.

9. Procédé selon l'une des revendications précédentes, plusieurs sources de lumière étant formées par scission de la lumière d'une source de lumière.

10. Procédé selon l'une des revendications précédentes, une excitation s'effectuant à travers l'objectif et l'activation par le biais de la lame de lumière.

11. Procédé selon l'une des revendications précédentes, l'excitation et l'activation s'effectuant par le biais de la lame de lumière.

12. Procédé selon l'une des revendications précédentes, la lumière d'excitation présentant une structuration.

13. Procédé selon la revendication 12, la structuration étant générée par un réseau disposé dans le trajet de rayon d'excitation.

14. Procédé selon l'une des revendications précédentes, la lumière d'excitation présentant une distribution ponctuelle.

15. Procédé selon l'une des revendications précédentes, l'activation s'effectuant à travers l'objectif et l'excitation par le biais de la lame de lumière, et la lumière d'activation présentant un modèle d'activation par un mouvement de balayage modulé ou une représentation de réseau.
